# EUROPÄISCHE PATENTSCHRIFT

(11) **EP 3 853 069 B1**
(45) Veröffentlichungstag und Bekanntmachung des Hinweises auf die Patenterteilung: **03.05.2023**
(21) Anmeldenummer: 19782897.3
(22) Anmeldetag: 11.09.2019
(51) Int. Cl.: B60Q 1/26, B60Q 1/28, F21S 43/239, F21S 43/243, F21S 43/249, F21S 43/14, F21S 43/251, F21S 43/27, F21S 43/31, F21S 45/37, B60R 19/52

(54) **LICHTLEITENDER KÜHLERGRILL FÜR EIN KRAFTFAHRZEUG**
LIGHT-GUIDING RADIATOR GRILL FOR A MOTOR VEHICLE
CALANDRE DE GUIDAGE DE LUMIÈRE POUR UN VÉHICULE AUTOMOBILE

(30) Priorität: 17.09.2018 CZ 20180478
(43) Veröffentlichungstag der Anmeldung: 28.07.2021
(73) Patentinhaber: Skoda Auto A.S., 293 01 Mladá Boleslav II (CZ)
(72) Erfinder: KRAMULE, Michal, 508 01 Horice (CZ); KOVÁR , Pavel, 293 01 Mladá Boleslav (CZ); RUZICKA, Zdenek, 294 01 Brezno 262 (CZ); NEVRELA, Petr, 746 01 Opava (CZ); BEZDECNY, Roman, 463 31 Frýdlant (CZ)
(86) Internationale Anmeldenummer: PCT/CZ2019/000045
(87) Internationale Veröffentlichungsnummer: WO 2020/057675

(56) Entgegenhaltungen:
- EP-A1- 3 190 006
- DE-U1-202012 008 792
- DE-U1-202017 102 639
- JP-A- 2012 113 970
- JP-A- 2013 095 216
- US-A- 4 977 487

## Beschreibung

### Technisches Gebiet

Die Erfindung betrifft einen Fahrzeugkühlergrill, der innen durchleuchtet und dem zugleich eine Lichtfunktionalität zugewiesen wird.

### Bisheriger Stand der Technik

Ein integraler Bestandteil jedes Kraftfahrzeuges ist sein Kühlersystem. Die Hauptkomponente eines solchen Kühlersystems ist der Kühler. Der Kühler ist ein Wärmetauscher, in den die vom Motor produzierte wärmetragende heiße Flüssigkeit eingetrieben wird und diese Wärme mittels Luft dem Wärmetauscher, also dem Kühler, entnommen wird. Die Luft gelang in den Kühlerbereich in der Regel durch die Maske des Kühlers oder den "Kühlergrill."

Der Kühlergrill wird in der Regel durch vertikale Rippen, horizontale Rippen oder Kombination von beiden gebildet. Zwischen den Rippen strömt die Luft in den Motorraum auf den Kühler ein. Die Luft kann auf den Kühler nur durch die Bewegung des Fahrzeuges und die Trägheit der Luftmoleküle einströmen, oder wird zu diesem Zweck hinter den Kühler auch ein Lüfter angeordnet.

Das Problem bei dem Kühlergrill besteht darin, dass er sich vom Erscheinungsbild her an der wichtigsten Stelle des Fahrzeuges - mitten an der Frontseite befindet. Deshalb waren die Hersteller von Anfang an der wirklichen gewerblichen Fahrzeugfertigung bemüht, die Kühlergrills ästhetisch ansprechend zu gestalten. Eine Herangehensweise um den Kühlergrill ästhetisch aufzubessern war, seine Rippen zu zieren, eventuell seine Form zu ändern. Ebenso kann das Bestreben der Hersteller beobachtet werden, den Kühlergrill möglichst wenig sichtbar zu machen, also das Bestreben diesen optisch weitestgehend mit der Frontpartie des Fahrzeuges zusammenfließen zu lassen. Andere Lösung ist, die Kühlergrillbaugruppe mit Innenbeleuchtung zu gestalten.

Beispielhaft ist das US-amerikanische Patent US9789814 B2, das eine Lösung beschreibt, in der der Kühlergrill umlaufend beleuchtet ist, wodurch ein visueller Effekt erzielt wird. Der Kühlergrill als solcher bleibt konzeptionell identisch. Die Bewahrung des ursprünglichen Kühlergrillkonzeptes gemäß der Beschreibung im Patent schafft nicht viel Raum für weitere Innovationen.

Weiteres Beispiel stellt das chinesische Gebrauchsmuster CN204279309 U dar, das eine Lösung beschreibt, in der in die Spalten des durch horizontale und vertikale Rippen gebildeten Kühlergrill LED-Spotleuchten eingesetzt sind. Durch das Leuchten dieser LED-Leuchten entsteht bestimmter visueller Effekt. Das ursprüngliche Kühlergrillkonzept bleibt jedoch identisch. Die Bewahrung des ursprünglichen Kühlergrillkonzeptes gemäß der Beschreibung im vorgenannten US-amerikanischen Patent sowie in dem behandelten chinesischen Gebrauchsmuster schaffen jedoch nicht viel Raum für weitere Innovationen.

Anderes Beispiel stellt das taiwanische Gebrauchsmuster TWM494725 U dar, das eine Lösung beschreibt, in der der Kühlergrill vertikale Rippen aufweist und an diesen Rippen die Leuchte angeordnet sind. Ebenso wie bei den vorstehenden Lösungen bleibt das Kühlergrillkonzept immer gleich.

Die JP 2012 113970 A und die JP 2013 095216 A offenbaren Fahrzeugbeleuchtungen mit länglichen, plattenförmigen Lichtleitern.

Die EP 3 190 006 A1 offenbart ein Designelement mit Wellenförmigen Lichtleitern.

Das Gebrauchsmuster DE 20 2017 102 639 U1 offenbart eine beleuchtete Luftkühleranordnung.

Das Gebrauchsmuster DE 20 2012 008 792 U1 offenbart eine Leuchtvorrichtung für eine Kühlerabdeckung eines Fahrzeugs.

Die US 4977487 offenbart eine Leuchtvorrichtung für ein Fahrzeug.

Es wäre also geeignet eine Lösung vorzubringen, in der der Kühlergrill einen Lichteffekt bieten wird, weiterhin die Luft in den Kühler ansaugen wird und gleichzeitig einen visuellen Eindruck abweichend von allen Lösungen nach dem Stand der Technik gewähren wird. Aus Sicht der gewerblichen Anwendbarkeit muss solcher Kühlergrill ferner wenigstens das erfüllen, dass er kompakt, mit der Karosserie kompatibel ist und seine ästhetische und Leuchtfunktion unter höchst unterschiedlichen Bedingungen wie Tag/Nacht, Trockenheit/Nässe, Winter/Sommer erfüllt.

### Darstellung der Erfindung

Die im Stand der Technik beschriebenen Probleme löst die Erfindung mit einem lichtleitenden Kühlergrill für ein Kraftfahrzeug, der wenigstens einen plattenförmigen Lichtleiter mit einer Menge von LED-Lichtquellen, einen Rahmen, ein Gehäuse und eine Außenabdeckung umfasst, wobei die Außenabdeckung mindestens 50 % der Fläche der Montageöffnung des Kühlergrills abdeckt und für das Licht des innerhalb des lichtleitenden Kühlergrills angeordneten Lichtleiters durchlässig ist. Es wird genutzt, dass sich von dem plattenförmigen Lichtleiter ein Rippenpaar nach oben sowie nach unten erstreckt, sodass eine sog. Fischskelettform erreicht wird.

Es wird genutzt, dass, bei sachgemäßem Einbau des Kühlergrills im Kraftfahrzeug, der lichtleitende Kühlergrill Öffnungen für die Luftlenkung zu einem Kühler hin aufweist wobei die Öffnungen für die Luftzufuhr in einem Bereich zwischen den vertikalen Rippen der Außenabdeckung in einem oberen Abschnitt der Außenabdeckung zum Kühler des Kraftfahrzeugs ausgebildet sind.

Vorteilhaft wird genutzt, dass sich die Menge der LED-Spotlichtquellen hinter einem undurchsichtigen Rahmen befindet und der plattenförmige Lichtleiter durch die Öffnung im undurchsichtigen Rahmen in den Bereich zwischen dem undurchsichtigen Rahmen und der Außenabdeckung hindurchgeht.

Vorteilhaft umfasst der lichtleitende Kühlergrill ferner ein Innenteil.

Vorteilhaft wird genutzt, dass sich die Menge der LED-Lichtquellen hinter einem undurchsichtigen Rahmen befindet und der plattenförmige Lichtleiter durch die Öffnung im undurchsichtigen Rahmen in den Bereich zwischen dem undurchsichtigen Rahmen und dem Innenteil hindurchgeht.

Vorteilhaft wird genutzt, dass das Innenteil nicht als eine ebene Fläche ausgestaltet ist und dass seine einzelnen Segmente einen Lichtanteil unter verschiedenen Winkeln reflektieren und für die Luftlenkung zum Kühler hin ausgestaltet sind.

Vorteilhaft wird genutzt, dass zwischen dem Rahmen und der Außenabdeckung der Innenteil angeordnet ist, der für das Licht in beiden Richtungen durchlässig ist.

Vorteilhaft wird genutzt, dass das Innenteil, die Außenabdeckung und der plattenförmige Lichtleiter aus einem synthetischen Polycarbonat (PC) oder Polymethylmethacrylat (PMMA) hergestellt sind.

Vorteilhaft wird genutzt, dass die Außenabdeckung in Form von vertikalen Rippen und das Innenteil für das Licht in beiden Richtungen durchlässig sind.

Vorteilhaft wird genutzt, dass die LED-Lichtquellen an einem oder an beiden Enden eines dünnen Lichtleiters angeordnet sind, wobei der dünne Lichtleiter an der Rückseite des plattenförmigen Lichtleiters befestigt ist.

Vorteilhaft wird genutzt, dass die Außenabdeckung in beiden Richtungen lichtdurchlässig ist.

Vorteilhaft wird genutzt, dass der plattenförmige Lichtleiter an der den LED-Lichtquellen zugewandten Seite eine Optik für die Homogenisierung von Licht aus jeder Lichtquelle und an der gegenüberliegenden Seite des plattenförmigen Lichtleiters eine Optik für die Homogenisierung des aus dem plattenförmigen Lichtleiter austretenden Gesamtlichtes aufweist.

### Erläuterung der Zeichnungen

Die Darstellung der Erfindung wird weiter anhand von Ausführungsbeispielen erläutert, die unter Nutzung der beigefügten Zeichnungen beschrieben sind, wobei die:
- Fig. 1: einen lichtleitenden Kühlergrill mit einem plattenförmigen Lichtleiter in einer Frontansicht zeigt, an dem die Verrippung der Außenabdeckung zu sehen ist.
- Fig. 2: eine prinzipielle Schnittdarstellung des lichtleitenden Kühlergrills mit einem plattenförmigen Lichtleiter zeigt.

### Ausführungsbeispiele der Erfindung

Die Hauptbestandteile des lichtleitenden Kühlergrills 1 sind die Außenabdeckung 1, das Innenteil 2, der Rahmen 4, das Gehäuse 5 und der plattenförmige Lichtleiter 3 mit einer Menge von LED-Lichtquellen.

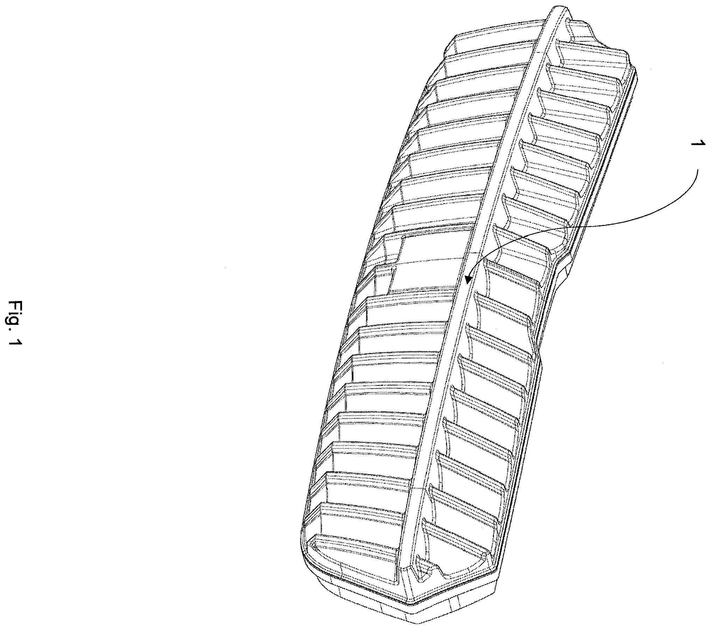

Die Außenabdeckung 1 kann aus Polycarbonat (PC) oder Polymethylmethacrylat (PMMA) hergestellt werden. Die Herstellung kann durch das Fräsen, Gießen, Pressen, Spritzgießen oder durch eine Kombination dieser Verfahren erfolgen. Die Außenabdeckung 1 ist ein kompaktes, unteilbares Teil und wird in die Gestalt für den Einsatz im konkreten Fahrzeug geformt. In einer ersten vorteilhaften Ausführung wird es so geformt, dass es eine Struktur gegenseitig verbundenen Rippen bildet, wobei die Rippen ein integraler Bestandteil der Außenabdeckung 1 sind und durch die Formung der Außenabdeckung 1 und/oder ihrer Bearbeitung entstehen. Gemäß der Erfindung sind im Bereich zwischen den Rippen in dem oberen Abschnitt der Außenabdeckung 1 Öffnungen für die Luftzufuhr zum Kühler ausgebildet. Die einzelnen Öffnungen sind im oberen Abschnitt zwischen den Rippenpaaren ausgebildet. Die einzelnen Rippen können beliebige Gestalt haben. Bevorzugt haben sie die Gestalt eines dreikantigen Prismas, trapezförmigen Prismas oder eines Quaders. In zweiter vorteilhafter Ausführung kann die Außenabdeckung 1 die Struktur von gebrochenen Flächen haben. In solchem Fall besteht die Oberfläche der Außenabdeckung 1 aus einer Menge von Flächen, die unterschiedlich orientiert sind, sodass die einzelnen Flächen miteinander einen anderen Winkel als 180° einschließen. In zweiter vorteilhafter Ausführung sind alle gebrochenen Flächen integraler Bestandteil der Außenabdeckung 1 und entstehen durch ihre Formung bei der Herstellung und/oder Bearbeitung. Die Außenabdeckung 1 ist so konstruiert, dass sie ein Lichtanteil in beide Richtungen durchlässt - in Richtung vom lichtleitenden Kühlergrill nach außen sowie nach innen. Die Darstellung der Außenabdeckung und ihrer Verrippung in einer Frontansicht zeigt die Figur 1.

Das Innenteil 2 kann aus dem synthetischen Polycarbonat (PC) oder Polymethylmethacrylat (PMMA) durch das Fräsen, Gießen, Pressen, Spritzgießen oder durch eine Kombination dieser Herstellverfahren hergestellt werden. Die Innenseite, d.h. dem Rahmen 4 des Innenteils 2 zugewandte Seite, ist mit oder ohne Plattierung, wobei die Plattierung durch eine Reihe von Verfahren erzielt werden kann, wie zum Beispiel durch Vakuumbedampfung oder stromloses Plattieren. Die Plattierung wird mindestens auf 50 % der Fläche der Innenseite des Innenteils 2 angebracht. Das Innenteil 2 ist nicht als ebene Fläche ausgestaltet. Seine Verformung ist wahlfrei und hängt von Kundenwünschen ab. Bevorzugt hat es eine Rippenform entsprechend der Beschreibung der Außenabdeckung 1 oder es besteht aus einer Menge von Flächen, wie bei der Außenabdeckung 1 beschrieben ist. In der Ausführung des an der Innenseite plattierten Innenteils 2 wird diese Plattierung so angebracht, dass diese das gesamte auf sie anfallende Licht reflektiert.

Der Rahmen 4 ist bevorzugt aus einem synthetischen Polycarbonat (PC) oder Polymethylmethacrylat (PMMA) hergestellt. Die Herstellung erfolgt durch das Spritzgießen. Der Rahmen 4 ist nicht als ebene Fläche ausgestaltet. Seine Formung ist wahlfrei und hängt von den Anforderungen auf das Endprodukt ab. Bevorzugt weist sie eine Rippenform auf oder besteht aus einer Menge von Flächen, wie bei der Außenabdeckung 1 beschrieben ist, und bildet mit der Außenabdeckung 1 eine Designeinheit. In dem Rahmen 4 befindet sich eine Öffnung, durch die der plattenförmige Lichtleiter 3 durchgeht. Die Form der Öffnung hängt von der konkreten Ausführung des plattenförmigen Lichtleiters 3 ab.

Das Gehäuse 5 ist bevorzugt aus einem Gemisch des Polycarbonats mit Acryl-Butadien-Styrol-Kautschuk oder aus einem talkumgefüllten Polypropylen mit Massenanteil zwischen 20-40 Prozent oder aus einem mit Glasfaser gefüllten Polybutylenterephthalat hergestellt. Die Herstellung erfolgt durch das Spritzgießen. Das Gehäuse 5 hat eine flache Rückwand, in der sich mindestens eine Durchlaufhülse 6 für die Führung der Speisung der Elektrobestandteile, und mindestens ein Entlüftungsteil 7 befinden. Bevorzugt gibt es drei oder vier Entlüftungsteile 7. Ebenso umfasst es eine Stelle für eine permanente über den ganzen Umfang umlaufende Verbindung mit der Außenabdeckung 1. Ein Bestandteil des Gehäuses 5 ist auch eine für die Befestigung des plattenförmigen Lichtleiters 3 angepasste Akkommodationsvorrichtung für den plattenförmigen Lichtleiter 3.

Der plattenförmige Lichtleiter 3 ist mit einer Menge von LED-Spotleuchten verbunden. Die Anzahl der LED-Spotleuchten ist wahlfrei und von den Kundenwünschen abhängig. Die LED-Lichtquellen sind am hinteren Abschnitt des plattenförmigen Lichtleiters 3 befestigt, damit das von diesen ausgestrahlte Licht hin zum vorderen Abschnitt des plattenförmigen Lichtleiters 3 und nachfolgend nach außen aus dem lichtleitenden Kühlergrill ausgestrahlt wird. In einer alternativen Ausführung kann ein dünner Lichtleiter mit LED-Lichtquellen an einem oder an beiden seinen Enden verwendet werden. In dieser Ausführung ist der dünne Lichtleiter an der Rückseite des plattenförmigen Lichtleiters 3 befestigt. In beiden Ausführungen sind alle LED-Lichtquellen an der Leiterplatte angeordnet und mit dem plattenförmigen Lichtleiter 3 im Kontakt. Das Licht der LED-Lichtquellen wird von dem lichtleitenden Kühlergrill nach außen so geleitet, dass es über die Schnittstelle LED - plattenförmiger Lichtleiter 3 nach außen vom plattenförmigen Lichtleiter 3 hin zur Außenabdeckung 1 und danach über die Außenabdeckung 1 nach außen vom lichtleitenden Kühlergrill hindurchgeht.

An der Rückseite des plattenförmigen Lichtleiters ist ein dünner Lichtleiter mit LED-Lichtquellen an einem oder beiden seinen Enden oder eine Menge von LED-Lichtquellen befestigt. Der plattenförmige Lichtleiter 3 weist an der den LED-Lichtquellen zugewandten Seite (an der Rückseite) eine Optik für die Homogenisierung von Licht und an der Vorderseite eine Optik für die Homogenisierung des aus dem plattenförmigen Lichtleiter 3 austretenden Gesamtlichtes auf, welche die Gestalt von Polstern, Mikrooptik, geformten Optikflächen, Kristallen aufweist.

Gemäß die Erfindung sind mehrere plattenförmige Lichtleiter 3, die so verbunden sind, dass sie eine Fischskelettform aufweisen. Der Lichtleiter in Fischskelettform besteht aus einer ebenen Platte, von der sich in einzelnen Schnitten Rippenpaare erstrecken, die auch die Form einer ebenen Platte haben, wobei sich vorzugsweise die kürzere Rippe unter einem Winkel von 60° bis 120° in der Richtung aufwärts von der ebenen Platte und die längere Rippe unter einem Winkel von 60° bis 120° abwärts von der ebenen Platte erstrecken. In Frontansicht erscheint die Platte als eine Gerade und die einzelnen Schnitte als Punkte an dieser Gerade. Von diesem Punkt erstrecken sich vorzugsweise unter dem Winkel von 60° bis 120° aufwärts eine die kürzere (obere) Rippe darstellende Gerade und unter gleichem Winkel abwärts eine die längere (untere) Rippe darstellende Gerade. Die Längen der einzelnen Rippen und die Relationen deren Längen ebenso wie die Anzahl der Rippen können unterschiedlich sein. In einer vorteilhaften Ausführung besteht der Lichtleiter in Fischskelettform aus einer ebenen Platte und insgesamt 18 Rippenpaaren und einer mittleren kürzeren (oberen) Rippe. 9 Rippenpaare sind an der rechten Seite und 9 Rippenpaare an der linken Seite. In solcher Ausführung ist an der Rückseite der ebenen Platte sowie aller Rippen eine Menge von LED-Lichtquellen oder ein dünner Lichtleiter mit LED-Lichtquellen an einem oder beiden seinen Enden angeordnet, wie bereits oben beschrieben wurde. Der Lichtleiter in Fischskelettform weist vorzugsweise auf der den LED-Lichtquellen zugewandten Seite (Rückseite) eine Optik für die Homogenisierung von Licht und an der Vorderseite eine Optik für die Homogenisierung des aus dem plattenförmigen Lichtleiter austretenden Gesamtlichtes auf, welche die Gestalt von Polstern, Mikrooptik, geformten Optikflächen, Kristallen aufweist.

In der ersten erfindungsgemäßen Ausführung umfasst der lichtleitende Kühlergrill 1 kein Innenteil 2.

Das Gehäuse 5 umfasst eine Akkommodationsvorrichtung für den plattenförmigen Lichtleiter 3, in die der Lichtleiter 3 eingeführt ist. An der Rückseite des plattenförmigen Lichtleiters 3 innerhalb der Akkommodationsvorrichtung ist auch eine LED-Lichtquelle oder ein dünner Lichtleiter mit LED-Lichtquellen an einem oder beiden seinen Enden angeordnet. Alle solchen LED-Lichtquellen sind an einer Leiterplatte angeordnet und mittels eines Kabelstrangs mit einem Stecker am Ende eingespeist, der von dem lichtleitenden Kühlergrill über die Durchlaufhülse 6 im Gehäuse 5 hinausgeführt ist.

An der Rückwand des Gehäuses 5 befindet sich mindestens ein Entlüftungsteil 7, in bevorzugter Ausführung sind dort drei oder vier angeordnet. Das Entlüftungsteil 7 bildet eine halbdurchlässige Membrane, die zwei Grundfunktionen hat. Die erste Funktion besteht in dem Ausgleich des Druckes in dem lichtleitenden Kühlergrill mit dem umliegenden atmosphärischen Druck und die zweite Funktion besteht in der Trocknung des Innenraumes des lichtleitenden Kühlergrills, bzw. in der Ableitung des Wasserdampfes aus dem durchleuchteten Kühlergrill nach außen. Aus diesem Grund umfasst das Entlüftungsteil 7 bevorzugt eine halbdurchlässige Membrane, welche die Wassermoleküle aus dem durchleuchteten Kühlergrill nach außen, jedoch nicht nach innen durchlässt. Der Grund für die Anordnung der Entlüftungsteile 7 in abgeschlossenen durchleuchteten Kühlergrill liegt darin, dass die Körper einzelner Bestandteile des durchleuchteten Kühlergrills in vorteilhaften Ausführungen aus Polycarbonat und Polymethylmethacrylat hergestellt sind, was polare Polymere sind, also auch Feuchtigkeit aufnehmend sind und durch die Aufnahme der Feuchtigkeit in den durchleuchteten Kühlergrill sehr geringe Wassermenge gelangen kann. Durch die Additiven in diesen Polymeren und deren Oberflächenbehandlung kann die Aufnahme der Feuchtigkeit und somit auch der Wassereintritt in den durchleuchteten Kühlergrill deutlich reduziert werden, jedoch dieses Phänomen kann nie vollständig eliminiert werden, deshalb muss der Wasserdurchtritt aus dem durchleuchteten Kühlergrill nach außen hin sichergestellt werden.

Das Gehäuse 5 ist mit einer permanenten untrennbaren Verbindung mit der Außenabdeckung 1 verbunden. Die Außenabdeckung 1 umfasst in vorteilhafter Ausführung Rippen in Form eines Prismas mit trapezförmigen Querschnitt oder eines trigonalen Prismas. In dem oberen Abschnitt der Außenabdeckung 1 sind zwischen den Rippen Öffnungen für die Luftzufuhr zum Kühler ausgebildet. Bei Nutzung des lichtleitenden Kühlergrills im Elektrofahrzeug sind diese Öffnungen für die Luftleitung zum Kühler nicht notwendig. In zweiter vorteilhafter Ausführung umfasst die Außenabdeckung 1 keine Rippen, sondern ist aus Flächen zusammengesetzt, die gegenseitig einen anderen als 180° Winkel einschließen und somit das Licht nach außen sowie nach innen vom lichtleitenden Kühlergrill unter anderem Winkel leiten. Die Außenabdeckung 1 ist für das Licht in beiden Richtungen - vom lichtleitenden Kühlergrill nach innen sowie nach außen durchlässig.

Zwischen dem Gehäuse 5 und der Außenabdeckung 1 befindet sich ein undurchlässiges Rahmen 4. Der Rahmen 4 hat sowohl die Funktion der Verankerung des plattenförmigen Lichtleiters 3, wie auch eine ästhetische Funktion, da er aufgrund seiner Undurchsichtigkeit den Lichtdurchgang in den Bereich hinter ihm verhindert, also in Bereich, wo sich Kabelstränge und weitere für die Funktion des Kühlergrills notwendige Elemente befinden und die ästhetisch nicht wirksam sind. Er trennt also physisch sowie optisch die ästhetischen Bestandteile des lichtleitenden Kühlergrills von den restlichen Bestandteilen ohne ästhetischen Funktion ab.

In der zweiten vorteilhaften Ausführung umfasst der lichtleitende Kühlergrill ein Innenteil 2.

Das Gehäuse 5 umfasst eine Akkommodationsvorrichtung für den plattenförmigen Lichtleiter 3, in die der Lichtleiter 3 eingeführt ist. An der Rückseite des plattenförmigen Lichtleiters 3 innerhalb der Akkommodationsvorrichtung ist auch eine LED-Lichtquelle oder ein dünner Lichtleiter mit LED-Lichtquellen an einem oder beiden seinen Enden angeordnet. Alle solchen LED-Lichtquellen sind an einer Leiterplatte angeordnet und mittels eines Kabelstrangs mit einem Stecker am Ende eingespeist, der von dem lichtleitenden Kühlergrill über die Durchlaufhülse 6 im Gehäuse 5 hinausgeführt ist.

An der Rückwand des Gehäuses 5 befindet sich mindestens ein Entlüftungsteil 7, in bevorzugter Ausführung sind dort drei oder vier angeordnet. Das Entlüftungsteil 7 bildet eine halbdurchlässige Membrane, die zwei Grundfunktionen hat. Die erste Funktion besteht in dem Ausgleich des Druckes in dem lichtleitenden Kühlergrill mit dem umliegenden atmosphärischen Druck und die zweite Funktion besteht in der Trocknung des Innenraumes des lichtleitenden Kühlergrills, bzw. in der Ableitung des Wasserdampfes aus dem durchleuchteten Kühlergrill nach außen. Aus diesem Grund umfasst das Entlüftungsteil 7 bevorzugt eine halbdurchlässige Membrane, welche die Wassermolekülen aus dem durchleuchteten Kühlergrill nach außen, jedoch nicht nach innen durchlässt. Der Grund für die Anordnung der Entlüftungsteile 7 in abgeschlossenen durchleuchteten Kühlergrill liegt darin, dass die Körper einzelner Bestandteile des durchleuchteten Kühlergrills in vorteilhaften Ausführungen aus Polycarbonat und Polymethylmethacrylat hergestellt sind, was polare Polymere sind, also auch Feuchtigkeit aufnehmend sind und durch die Aufnahme der Feuchtigkeit in den durchleuchteten Kühlergrill sehr geringe Wassermenge gelangen kann. Durch die Additiven in diesen Polymeren und deren Oberflächenbehandlung kann die Aufnahme der Feuchtigkeit und somit auch der Wassereintritt in den durchleuchteten Kühlergrill deutlich reduziert werden, jedoch dieses Phänomen kann nie vollständig eliminiert werden, deshalb muss der Wasserdurchtritt aus dem durchleuchteten Kühlergrill nach außen hin sichergestellt werden.

Das Gehäuse 5 ist mit einer permanenten untrennbaren Verbindung mit der Außenabdeckung 1 verbunden. Die Außenabdeckung 1 umfasst in vorteilhafter Ausführung Rippen in Form eines Prismas mit trapezförmigen Querschnitt oder eines trigonalen Prismas. In dem oberen Abschnitt der Außenabdeckung 1 sind zwischen den Rippen Öffnungen für die Luftzufuhr zum Kühler ausgebildet. Bei Nutzung des lichtleitenden Kühlergrills im Elektrofahrzeug sind diese Öffnungen für die Luftleitung zum Kühler nicht notwendig, was aber nicht gemäß der beanspruchten Erfindung ist. Die Außenabdeckung 1 ist für das Licht in beiden Richtungen - vom lichtleitenden Kühlergrill nach innen sowie nach außen durchlässig.

Zwischen dem Gehäuse 5 und der Außenabdeckung 1 befindet sich ein undurchlässiges Rahmen 4. Der Rahmen 4 hat sowohl die Funktion der Verankerung des plattenförmigen Lichtleiters 3, wie auch eine ästhetische Funktion, da er aufgrund seiner Undurchsichtigkeit den Lichtdurchgang in den Bereich hinter ihm verhindert, also in Bereich, wo sich Kabelstränge und weitere für die Funktion des Kühlergrills notwendige Elemente befinden und die ästhetisch nicht wirksam sind. Er trennt also physisch sowie optisch die ästhetischen Bestandteile des lichtleitenden Kühlergrills von den restlichen Bestandteilen ohne ästhetischen Funktion ab.

Zwischen den Rahmen 4 und der Außenabdeckung 1 ist das Innenteil 2 eingesetzt, das aus einem durchsichtigen Polymerstoff hergestellt und an der zum Rahmen 4 hin orientierten Seite mit oder ohne Plattierung ist. Die Plattierung ist wenigstens auf 50 % der Fläche des Innenteils 2 angebracht und in vorteilhafter Ausführung sind es 70 %. Die Form des Innenteils 2 ist in dieser Ausführung so, wie sie oben bereits beschrieben wurde.

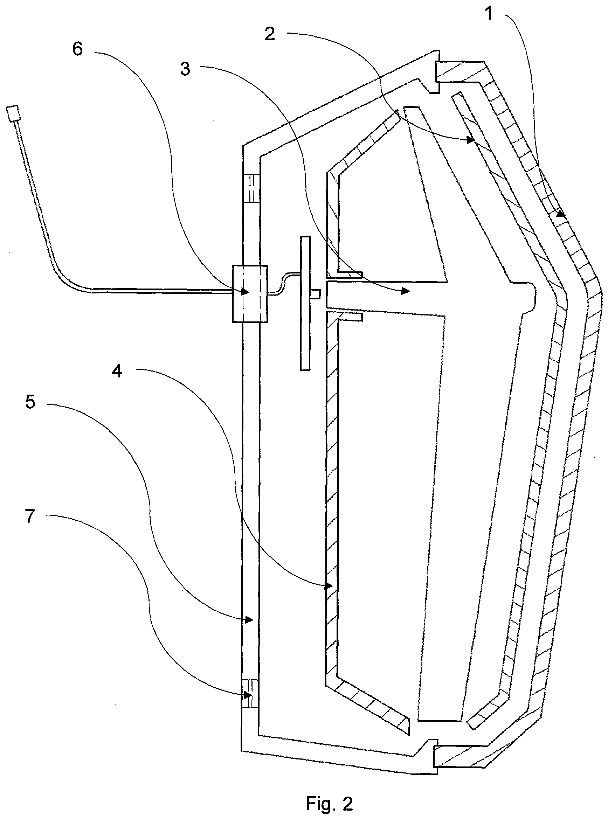

In der ersten Ausführung sowie in der zweiten vorteilhaften Ausführung der Erfindung ist die Außenabdeckung 1 für das Licht in beiden Richtungen durchlässig, also vom Kühlergrill nach innen sowie nach außen. In der zweiten vorteilhaften Ausführung ist für das Licht in beiden Richtungen auch das Innenteil 2 durchlässig. In beiden Ausführungen deckt die Außenabdeckung 1 wenigstens 50 % der Fläche der Montageöffnung des Kühlergrills ab. Bei beiden Ausführungen ist der lichtleitende Kühlergrill auf zwei Modi bzw. zwei Designs eingestellt, nämlich Tagesdesign und Nachtdesign. Die Einstellung des Designs erfolgt über die Schalttafel des Fahrzeuges gemeinsam mit der automatischen Betätigung der Schweinwerfer.
Prinzipielle Schnittdarstellung des lichtleitenden Kühlergrills mit einem plattenförmigen Lichtleiter 3 zeigt die Figur 2.

Das Tagesdesign ist dadurch definiert, dass der plattenförmige Lichtleiter 3 nicht eingespeist wird und leuchtet also nicht. In diesem Design dringt das Licht von außen in den lichtleitenden Kühlergrill über die Außenabdeckung 1 ein. Bei der ersten vorteilhaften Ausführung des lichtleitenden Kühlergrills erleuchtet das hinter die Außenabdeckung 1 eingedrungene Licht den lichtleitenden Kühlergrill und wird nachfolgend von dem lichtleitenden Kühlergrill über die Außenabdeckung 1 nach außen geleitet. In der Frontansicht ist der gewünschte visuelle Effekt sichtbar, wobei die konkrete Ausführung des visuellen Effekts sich aus der Form der Außenabdeckung 1 ergibt. Bei der zweiten vorteilhaften Ausführung des durchleuchteten Kühlergrills wird das hinter die Außenabdeckung 1 eingedrungene Licht in dem Bereich zwischen der Außenabdeckung 1 und dem Innenteil 2 partiell reflektiert und ein Teil wird von dem lichtleitenden Kühlergrill über die Außenabdeckung 1 nach außen geleitet, wodurch der lichtleitende Kühlergrill durchleuchtet wird. In der Frontansicht kann ein visueller Effekt beobachtet werden, dessen konkrete Ausführung sich aus der Form der Außenabdeckung 1 und des Innenteils 2 ergibt.

Das Nachtdesign ist dadurch definiert, dass der plattenförmige Lichtleiter 3 eingespeist wird und somit hin zur Außenabdeckung 1 und nach außen vom lichtleitenden Kühlergrill leuchtet. In der ersten Ausführung wird ein Teil des vom plattenförmigen Lichtleiter 3 emittierten Lichtes von der Innenseite der Außenabdeckung 1 reflektiert, also von der nach Innen des lichtleitenden Kühlergrills orientierten Seite ein Teil geht durch die Außenabdeckung 1 nach außen vom lichtleitenden Kühlergrill und ein Teil des Lichtes der LED-Lichtquellen geht in die vertikal orientierten Rippen des plattenförmigen Lichtleiters 3 durch, wodurch der lichtleitende Kühlergrill beleuchtet wird. In der Frontansicht ist der gewünschte visuelle Effekt sichtbar, wobei sich die konkrete Ausführung des visuellen Effekts aus der Form der Außenabdeckung 1 ergibt. In der zweiten vorteilhaften Ausführung geht ein Teil des vom plattenförmigen Lichtleiter 3 emittierten Lichtes über die Außenabdeckung 1 vom lichtleitenden Kühlergrill nach außen hinweg und ein Teil wird von der Innenseite der Außenabdeckung 1 nach Innen des lichtleitenden Kühlergrills reflektiert. Dieses reflektierte Licht wird dann von der Oberfläche des Innenteils 2 zurück an die Innenseite der Außenabdeckung 1, reflektiert, wobei ein Teil des Lichtes geht wieder von dem lichtleitenden Kühlergrill nach außen hinweg und ein Teil wird zurück nach Innen reflektiert, wodurch der lichtleitende Kühlergrill durchleuchtet wird. In der Frontansicht ist der gewünschte visuelle Effekt sichtbar, wobei die konkrete Ausführung des visuellen Effekts sich aus der Form der Außenabdeckung 1 und des Innenteils 2 ergibt.

Der durchleuchtete Kühlergrill ist an der Fahrzeugfrontseite mittels des Bauteils "End Plate" befestigt, und zwar mittels Schrauben und Einsteckmuttern. Der Bauteil "End Plate" ist ein Universalteil, das sowohl den durchleuchteten Kühlergrill, wie auch einen einfachen einschichtigen (mit einer Dicke) schwarzen Kühlergrill tragen kann.

### Bezugszeichenliste

- 1: Außenabdeckung
- 2: Innenteil
- 3: dünner Lichtleiter
- 4: Rahmen
- 5: Gehäuse
- 6: Durchlaufhülse
- 7: Entlüftungsteil

## Patentansprüche

1. Ein lichtleitender Kühlergrill für ein Kraftfahrzeug umfassend wenigstens einen plattenförmigen Lichtleiter (3), eine Menge von LED-Lichtquellen, einen Rahmen (4), ein Gehäuse (5) und eine Außenabdeckung (1), wobei die Außenabdeckung (1) mindestens 50 % einer Fläche einer Montageöffnung des Kühlergrills abdeckt und für Licht des innerhalb des lichtleitenden Kühlergrills angeordneten Lichtleiters (3) durchlässig ist, wobei die Außenabdeckung (1) in Form von vertikalen Rippen ausgebildet ist, wobei, bei sachgemäßem Einbau des Kühlergrills im Kraftfahrzeug, der lichtleitende Kühlergrill Öffnungen für die Luftlenkung zu einem Kühler des Kraftfahrzeugs hin aufweist, **dadurch gekennzeichnet, dass** sich Rippenpaare vertikaler Rippen des plattenförmigen Lichtleiters (3) von dem plattenförmigen Lichtleiter (3) nach oben sowie nach unten erstrecken, sodass eine sog. Fischskelettform erreicht wird, wobei die Öffnungen für die Luftzufuhr in einem Bereich zwischen den vertikalen Rippen der Außenabdeckung (1) in einem oberen Abschnitt der Außenabdeckung (1) zum Kühler des Kraftfahrzeugs ausgebildet sind.

2. Ein lichtleitender Kühlergrill nach Anspruch 1 **dadurch gekennzeichnet, dass** sich die Menge der LED-Lichtquellen hinter einem undurchsichtigen Rahmen (4) befindet und der plattenförmige Lichtleiter (3) durch eine Öffnung im undurchsichtigen Rahmen (4) in einen Bereich zwischen dem undurchsichtigen Rahmen (4) und der Außenabdeckung (1) hindurchgeht.

3. Ein lichtleitender Kühlergrill nach Anspruch 1 **dadurch gekennzeichnet, dass** der lichtleitende Kühlergrill ferner ein Innenteil (2) umfasst.

4. Ein lichtleitender Kühlergrill nach Anspruch 3, **dadurch gekennzeichnet, dass** sich die Menge der LED-Lichtquellen hinter einem undurchsichtigen Rahmen (4) befindet und der plattenförmige Lichtleiter (3) durch die Öffnung im undurchsichtigen Rahmen (4) in den Bereich zwischen dem undurchsichtigen Rahmen (4) und dem Innenteil (2) hindurchgeht.

5. Ein lichtleitender Kühlergrill nach Anspruch 3, **dadurch gekennzeichnet, dass** das Innenteil (2) nicht als ebene Fläche ausgebildet ist und seine einzelnen Segmente ein Teil des Lichtes unter verschiedenen Winkeln reflektieren und für die Luftlenkung zum Kühler ausgestaltet sind.

6. Ein lichtleitender Kühlergrill nach Anspruch 3, **dadurch gekennzeichnet, dass** das Innenteil (2), das für das Licht in beiden Richtungen durchlässig ist, zwischen dem Rahmen (4) und der Außenabdeckung (1) angeordnet ist.

7. Ein lichtleitender Kühlergrill nach Anspruch 3, **dadurch gekennzeichnet, dass** das Innenteil (2), die Außenabdeckung (1) und der plattenförmige Lichtleiter (3) aus einem synthetischen Polycarbonat (PC) oder Polymethylmethacrylat (PMMA) hergestellt sind.

8. Ein lichtleitender Kühlergrill nach Anspruch 1 oder 3, **dadurch gekennzeichnet, dass** die LED-Lichtquellen an einem oder an beiden Enden eines dünnen Lichtleiters angeordnet sind, wobei der dünne Lichtleiter an der Rückseite des plattenförmigen Lichtleiters (3) befestigt ist.

9. Ein lichtleitender Kühlergrill nach Anspruch 1 oder 3, **dadurch gekennzeichnet, dass** die Außenabdeckung (1) für das Licht in beiden Richtungen durchlässig ist.

10. Ein lichtleitender Kühlergrill nach Anspruch 1 oder 3, **dadurch gekennzeichnet, dass** der plattenförmige Lichtleiter (3) an der den LED-Lichtquellen zugewandten Seite eine Optik für die Homogenisierung von Licht aus jeder Lichtquelle und an der gegenüberliegenden Seite des plattenförmigen Lichtleiters (3) eine Optik für die Homogenisierung des aus dem plattenförmigen Lichtleiter (3) austretenden Gesamtlichtes aufweist.

## Claims

1. A light-guiding radiator grill for a motor vehicle comprising at least one plate-shaped light guide (3), a quantity of LED light sources, a frame (4), a housing (5) and an outer cover (1), wherein the outer cover (1) covers at least 50% of an area of an assembly opening of the radiator grill and is permeable for light of the light guide (3) arranged within the light-guiding radiator grill, wherein the outer cover (1) is designed in the form of a vertical ribs, wherein, when the radiator grill is properly installed in the motor vehicle, the light-guiding radiator grill has openings for the air steering towards a radiator of the motor vehicle, **characterized in that** rib pairs of vertical ribs of the plate-shaped light guide (3) extend from the plate-shaped light guide (3) upwards and downwards, so that a so-called fish skeleton shape is achieved,
wherein the openings for the air supply are formed in a region between the vertical ribs of the outer cover (1) in an upper section of the outer cover (1) for the radiator of the motor vehicle.

2. A light-guiding radiator grill according to claim 1,
**characterized in**
**that** the quantity of LED light sources is located behind an opaque frame (4) and the plate-shaped light guide (3) passes through an opening in the opaque frame (4) in a region between the opaque frame (4) and the outer cover (1).

3. A light-guiding radiator grill according to claim 1,
**characterized in**
**that** the light-guiding radiator grill further comprises an inner part (2).

4. A light-guiding radiator grill according to claim 3,
**characterized in**
**that** the quantity of LED light sources is located behind an opaque frame (4) and the plate-shaped light guide (3) passes through the opening in the opaque frame (4) in the region between the opaque frame (4) and the inner part (2).

5. A light-guiding radiator grill according to claim 3,
**characterized in**
**that** the inner part (2) is not formed as a flat surface and its individual segments reflect a part of the light at different angles and are designed for air steering to the radiator.

6. A light-guiding radiator grill according to claim 3,
**characterized in**
**that** the inner part (2), which is permeable for the light in both directions, is arranged between the frame (4) and the outer cover (1).

7. A light-guiding radiator grill according to claim 3,
**characterized in**
**that** the inner part (2), the outer cover (1) and the plate-shaped light guide (3) are made of a synthetic polycarbonate (PC) or polymethyl methacrylate (PMMA).

8. A light-guiding radiator grill according to claim 1 or 3,
**characterized in**
**that** the LED light sources are arranged at one or at both ends of a thin light guide, wherein the thin light guide is fastened to the rear side of the plate-shaped light guide (3).

9. A light-guiding radiator grill according to claim 1 or 3,
**characterized in**
**that** the outer cover (1) is permeable for the light in both directions.

10. A light-guiding radiator grill according to claim 1 or 3,
**characterized in**
**that** the plate-shaped light guide (3) has optics for the homogenization of light from each light source on the side facing the LED light sources and optics for the homogenization of the total light exiting the plate-shaped light guide (3) on the opposite side of the plate-shaped light guide (3).

## Revendications

1. Grille de radiateur à fibre optique pour véhicule automobile comprenant au moins une fibre optique en forme de plaque (3), une quantité de sources lumineuses LED, un cadre (4), un boîtier (5) et un couvercle externe (1), dans lequel le couvercle externe (1) recouvre au moins 50 % d'une surface d'une ouverture de montage de la grille de radiateur et est perméable à la lumière de la fibre optique (3) disposée à l'intérieur de la grille de radiateur à fibre optique, dans lequel le couvercle externe (1) est conçu sous la forme de nervures verticales, dans lequel, dans le cas d'un montage approprié de la grille de radiateur dans le véhicule automobile, la grille de radiateur à fibre optique comprend des ouvertures pour la déviation de l'air vers un radiateur du véhicule automobile, **caractérisée en ce que** des paires de nervures verticales de la fibre optique en forme de plaque (3) s'étendent de la fibre optique en forme de plaque (3) vers le haut ainsi que vers le bas, de façon à obtenir ce qu'on appelle un flux en forme d'arêtes de poisson,
dans lequel les ouvertures sont conçues pour l'introduction d'air dans une partie entre les nervures verticales du couvercle externe (1) dans une portion supérieure du couvercle externe (1) vers le radiateur du véhicule automobile.

2. Grille de radiateur à fibre optique selon la revendication 1, **caractérisée en ce que** la quantité de sources lumineuses LED se trouvent derrière un cadre opaque (4) et la fibre optique en forme de plaque (3) traverse une ouverture dans le cadre opaque (4) dans une partie entre le cadre opaque (4) et le couvercle externe (1).

3. Grille de radiateur à fibre optique selon la revendication 1, **caractérisée en ce que** la grille de radiateur à fibre optique comprend en outre une partie interne (2).

4. Grille de radiateur à fibre optique selon la revendication 3, **caractérisée en ce que** la quantité de sources lumineuses LED se trouvent derrière un cadre opaque (4) et la fibre optique en forme de plaque (3) traverse l'ouverture dans le cadre opaque (4) dans une partie entre le cadre opaque (4) et la partie interne (2).

5. Grille de radiateur à fibre optique selon la revendication 3, **caractérisée en ce que** la partie interne (2) n'est pas conçue comme une surface plane et ses différentes segments reflètent une partie de la lumière sous des angles différents et sont conçus pour la déviation de l'air vers le radiateur.

6. Grille de radiateur à fibre optique selon la revendication 3, **caractérisée en ce que** la partie interne (2), qui est transparente pour la lumière dans les deux sens, est disposée entre le cadre (4) et le couvercle externe (1).

7. Grille de radiateur à fibre optique selon la revendication 3, **caractérisée en ce que** la partie interne (2), le couvercle externe (1) et la fibre optique en forme de plaque (3) sont constitués d'un polycarbonate synthétique (PC) ou de polyméthylméthacrylate (PMMA).

8. Grille de radiateur à fibre optique selon la revendication 1 ou 3, **caractérisée en ce que** les sources lumineuses LED sont disposées sur une ou sur les deux extrémités d'une fibre optique mince, dans lequel la fibre optique mince est fixée à l'arrière de la fibre optique en forme de plaque (3).

9. Grille de radiateur à fibre optique selon la revendication 1 ou 3, **caractérisée en ce que** le couvercle externe (1) est transparent dans les deux sens pour la lumière.

10. Grille de radiateur à fibre optique selon la revendication 1 ou 3, **caractérisée en ce que** la fibre optique en forme de plaque (3) comprend, sur le côté orienté vers les sources lumineuses LED, une optique pour l'homogénéisation de la lumière provenant de chaque source lumineuse et, sur le côté opposé de la fibre optique en forme de plaque (3), une optique pour l'homogénéisation de la lumière totale sortant de la fibre optique en forme de plaque (3).
